# FASCICULE DE BREVET EUROPEEN

(11) **EP 4 463 374 B1**
(45) Date de publication et mention de la délivrance du brevet: **03.06.2026**
(21) Numéro de dépôt: 23700265.4
(22) Date de dépôt: 03.01.2023
(51) Int. Cl.: B64C 9/22, B64C 13/34

(54) **VOLET MOBILE DE BORD D'ATTAQUE A CHEMINS MULTIPLES DE PASSAGE D'EFFORTS**
BEWEGLICHE VORDERKANTENKLAPPE MIT MEHREREN KRAFTSTRÖMUNGSPFADE
MOVABLE LEADING-EDGE FLAP WITH MULTIPLE FORCE FLOW PATHS

(30) Priorité: 11.01.2022 BE 202205010
(43) Date de publication de la demande: 20.11.2024
(73) Titulaire: Sonaca, 6041 Gosselies (BE)
(72) Inventeur: DE PLAEN, Didier, 1150 WOLUWE-SAINT-PIERRE (BE); HARRE, Michel, 59700 MARCQ-EN-BAROEUL (FR)
(74) Mandataire: Santarelli
(86) Numéro de dépôt international: PCT/EP2023/050056
(87) Numéro de publication internationale: WO 2023/135037

(56) Documents cités:
- EP-A1- 0 818 387
- EP-A1- 3 299 278
- WO-A2-2010/026410
- US-A- 4 471 928
- US-A1- 2018 281 927

## Description

### DOMAINE TECHNIQUE

La présente invention se rapporte au domaine des ailes d'aéronef, du type comprenant un corps central fixe d'aile portant un ou plusieurs volets mobiles de bord d'attaque, également dénommés « Slats » en langue anglaise.

Il est noté que l'invention s'applique à tous les types d'aéronef, comme une aile volante, un avion à moteur en queue de fuselage, un avion supersonique, etc.

### ETAT DE LA TECHNIQUE ANTERIEURE

Sur les aéronefs, chacune des deux ailes de la voilure est généralement équipée de volets mobiles hypersustentateurs, montés au bord d'attaque et au bord de fuite de l'aile.

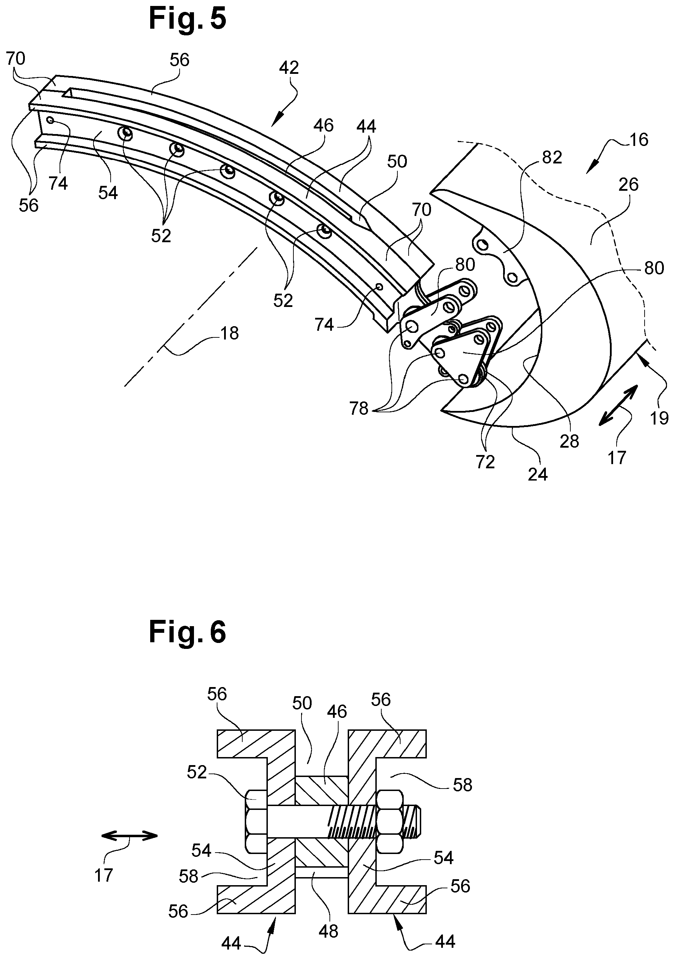

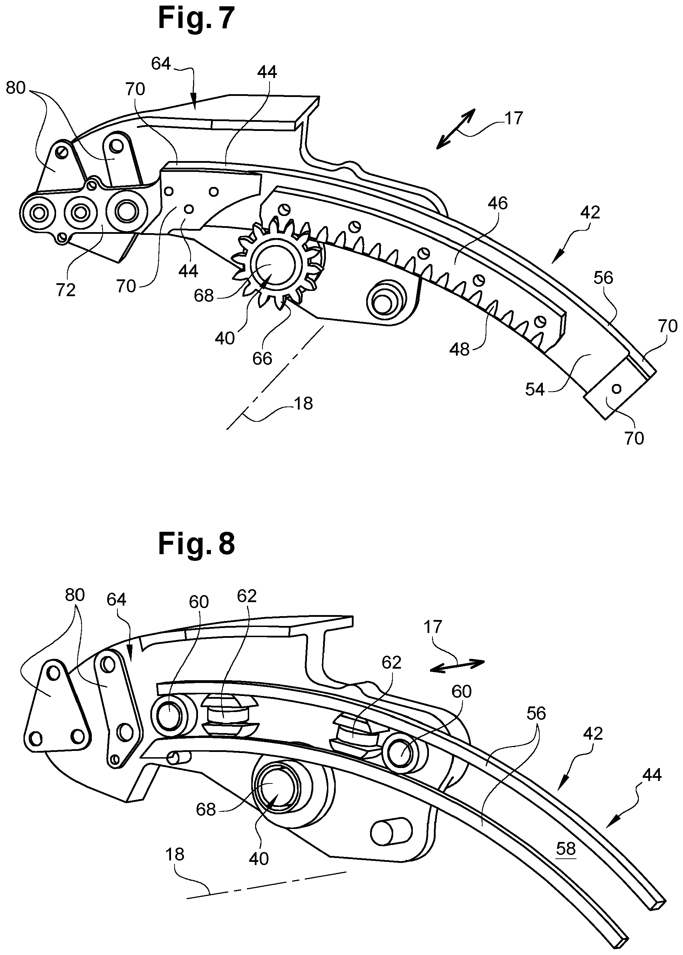

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. Toujours de façon connue de l'homme du métier, le déplacement et le guidage de chaque volet s'effectue à l'aide de moyens logés dans un corps central fixe d'aile, tel que cela ressort par exemple du document EP 0 818 387. Ces moyens permettent de déplacer et de guider chaque volet mobile de bord d'attaque selon une trajectoire habituellement en arc de cercle par rapport au corps central fixe d'aile, entre une position rentrée dans laquelle le volet épouse sensiblement le corps fixe, et une position déployée dans laquelle ce volet est déplacé vers l'avant et éventuellement vers le bas. Document WO 2010/026410 divulgue un ensemble d'aile d'avion, comportant des parois intérieures et extérieures espacées les unes des autres le long d'une âme d'un longeron dans le sens de l'envergure, où l'âme du longeron et son contenu sont formés d'un seul tenant en une seule pièce. Document EP 3299278 A1 divulgue un volet mobile de bord d'attaque avec les caractéristiques du préambule de la revendication 1 (fig. 5 à 7).

Plus précisément, pour permettre le guidage en rotation du volet mobile, celui-ci est généralement équipé de plusieurs rails d'entraînement et/ou de guidage, en forme d'arc de cercle correspondant à la trajectoire du volet en déplacement. Les rails qui remplissent une fonction d'entraînement du volet sont dimensionnés et prévus dans un nombre capable d'assurer, en vol, le transfert des efforts du volet vers le corps central fixe de l'aile. Ils coopèrent avec des galets portés par ce corps central fixe d'aile, et également avec des moyens de mise en mouvement du type à roues dentées.

Bien que cette configuration soit très répandue sur les ailes d'aéronef, elle reste perfectible à plusieurs égards.

Tout d'abord en matière de sécurité et de réponse aux normes, toujours plus contraignantes pour ce qui concerne les cas de rupture des pièces d'aéronef. Dans le cas des rails d'entraînement, des ruptures ou amorces de ruptures sur ces rails peuvent ne pas être détectées à temps, et conduire à un risque de détachement du volet.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un volet mobile de bord d'attaque pour aéronef selon la revendication 1 comprenant une partie aérodynamique ainsi qu'au moins un système de rail d'entraînement et de guidage de ce volet mobile, le volet comprenant également des moyens de raccordement mécanique de la partie aérodynamique sur une portion d'extrémité avant du système de rail d'entraînement et de guidage.

Selon l'invention, le système de rail d'entrainement et de guidage comporte deux rails s'étendant chacun sur toute la longueur du système de rail, une armature intermédiaire équipée d'une piste dentée d'entraînement étant logée entre les deux rails selon une direction d'empilement de ces trois éléments distincts, la direction d'empilement correspondant à la direction d'envergure du volet mobile.

De plus, des éléments de fixation des rails permettent de fixer chaque rail sur l'armature intermédiaire, et, préférentiellement, traversent chacun les deux rails ainsi que l'armature intermédiaire équipée de la piste dentée d'entraînement.

En outre, lesdits moyens de raccordement mécanique de la partie aérodynamique sont fixés sur une portion d'extrémité avant de chacun des deux rails.

Enfin, chacun des deux rails présente une section en forme générale de C, avec les deux C agencés dos-à-dos et leurs creux ouverts dans la direction d'envergure, les creux définis par la forme générale en C des rails étant par exemple destinés à recevoir des éléments de guidage du volet mobile, même si d'autres solutions techniques peuvent être envisagées, sans sortir du cadre de l'invention.

L'invention apporte tout d'abord une réponse satisfaisante aux risques de rupture ou d'amorce de rupture sur le système de rail d'entraînement et de guidage. En effet, grâce au doublement des rails au sein de ce système, si l'un d'eux est endommagé, l'autre peut assurer la reprise des efforts entre la partie aérodynamique du volet et le corps central fixe d'aile. Les deux rails peuvent ainsi être conçus pour assurer chacun, indépendamment l'un de l'autre, une reprise d'efforts à une intensité donnée et pendant une durée prédéterminée, limitant de ce fait fortement les risques de perte du volet en cas d'endommagement, voire les éradiquant entièrement. En d'autres termes, le système de rail selon l'invention présente deux chemins de passage d'efforts distincts entre la partie aérodynamique du volet et la piste dentée d'entraînement, conférant à ce système un degré de sécurité augmenté et capable de répondre aux normes les plus sévères en la matière. Le système de rail présente ainsi un caractère dit « Fail Safe » en langue anglaise, qui autorise l'endommagement de l'un des deux rails sans risquer de dommages conséquents comme la perte / le détachement du volet.

En outre, l'empilement des deux rails et de la piste dentée d'entraînement confère un caractère compact à cet ensemble, particulièrement avantageux dans cet environnement habituellement très encombré. Toujours en matière d'encombrement, celui-ci est réduit dans la direction de l'épaisseur de l'aile, lorsque les éléments de guidage sont logés latéralement dans les creux ouverts, définis par les rails en forme générale en C.

Également, la dissociation entre la piste dentée d'encombrement et les deux rails permet avantageusement de ne pas fragiliser la tenue mécanique de ces derniers, du fait de l'absence de dents sur ces rails.

L'invention prévoit par ailleurs au moins l'une quelconque des caractéristiques optionnelles suivantes, prises isolément ou en combinaison.

De préférence, chacun des deux rails est réalisé d'un seul tenant, c'est-à-dire d'une seule pièce, ou encore monobloc.

De préférence, les moyens de raccordement mécanique comprennent des ferrures fixées sur les deux rails.

De préférence, les éléments de fixation des rails comprennent des boulons répartis le long du système de rail d'entrainement et de guidage. D'autres types d'éléments de fixation sont néanmoins envisageables, sans sortir du cadre de l'invention.

De part et d'autre d'un espace défini entre les deux rails pour le logement de l'armature intermédiaire équipée de la piste dentée, chacun des deux rails présente des portions d'appui sur l'autre rail, selon la direction d'empilement.

Les portions d'appui sont traversées par des éléments de fixation.

De préférence, au moins un élément de guidage en forme de galet latéral de guidage du volet mobile, coopérant avec un chant latéral externe de l'une des branches des C, est porté par un support en forme de chape comprenant deux branches de chape présentent chacune, au niveau d'une extrémité libre de celles-ci, une extension de branche de chape qui s'étend au-delà du galet latéral dans une direction opposée à celle d'une base de la chape, les deux extensions de branche de chape étant agencées de part et d'autre de la branche du C avec laquelle le galet latéral coopère. Cela permet au galet latéral, en cas de défaillance sur l'un ou plusieurs des galets principaux, de remplir une fonction sécuritaire, dite « Fail Safe », en assurant durant au moins une durée déterminée la fonction de guidage en hauteur/vertical normalement assurée par le galet principal défaillant. Dans ce cas de défaillance, le galet précité remplit alors les fonctions de guidage latéral et de guidage vertical du volet.

L'invention a également pour objet une aile d'aéronef selon la revendication 5 comprenant un corps central fixe d'aile, ainsi qu'au moins un volet mobile de bord d'attaque tel que décrit ci-dessus, destiné à être déplacé relativement audit corps central fixe entre une position déployée et une position rentrée, le corps central fixe d'aile étant équipé de moyens d'actionnement de la piste dentée d'entraînement du volet mobile, ces moyens d'actionnement comprenant de préférence une roue dentée d'entraînement engrenant avec la piste dentée d'entraînement du volet mobile.

De préférence, l'aile comporte des ferrures de renfort agencées dans une portion de bord d'attaque du corps central fixe de l'aile, et les moyens d'actionnement sont montés sur ces ferrures de renfort.

De préférence, le corps central fixe est équipé d'éléments de guidage du volet mobile, coopérant avec les rails.

Selon un premier mode de réalisation préféré de l'invention, au moins certains des éléments de guidage du volet mobile, et de préférence la totalité d'entre eux, sont logés dans les creux définis par la forme générale en C des rails.

Préférentiellement, dans ce premier mode, les éléments de guidage comprennent des galets principaux coopérant intérieurement avec les deux branches opposées des C, et de préférence également des galets latéraux coopérant avec l'âme centrale de ces mêmes C.

Selon un second mode de réalisation préféré de l'invention, au moins certains des éléments de guidage du volet mobile coopèrent avec les rails en étant agencés en dehors des creux définis par la forme générale en C des rails.

Préférentiellement, dans ce second mode, les éléments de guidage comprennent des galets principaux coopérant extérieurement avec les branches des C, et de préférence également des galets latéraux coopérant aussi extérieurement avec les branches des C.

Les deux modes de réalisation préférés décrits ci-dessus sont combinables, sans sortir du cadre de l'invention.

Enfin, l'invention a également pour objet un aéronef selon la revendication 13 comprenant au moins une aile telle que décrite ci-dessus, cette même aile étant préférentiellement équipée de plusieurs volets mobiles de bord d'attaque.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef ;
- la figure 2 représente une vue schématique et partielle en coupe d'une aile d'aéronef selon la présente invention, munie d'un volet mobile de bord d'attaque représenté dans deux positions distinctes ;
- la figure 3 représente une vue partielle en perspective d'un système de rail d'entrainement et de guidage faisant partie intégrante du volet mobile de bord d'attaque montré sur la figure 2, et se présentant sous la forme d'un premier mode de réalisation préféré de l'invention ;
- la figure 4 représente une vue en perspective similaire à la précédente, selon un autre angle de vue ;
- la figure 5 représente une vue partiellement éclatée en perspective du système de rail d'entrainement et de guidage montré sur les figures précédentes, en coopération avec la partie aérodynamique de ce volet mobile ;
- la figure 6 est une vue en coupe transversale du système de rail montré sur la figure précédente ;
- la figure 7 représente une vue en perspective du système de rail en coopération avec des moyens d'actionnement intégrés au corps fixe d'aile, la vue étant coupée selon un plan de coupe orthogonal à la direction d'envergure du volet ;
- la figure 8 représente une vue en perspective similaire à celle de la figure 7, coupée selon un autre plan de coupe orthogonal à la direction d'envergure du volet ;
- la figure 9 représente une vue en coupe du système de rail en coopération avec des moyens d'actionnement intégrés au corps fixe d'aile, la vue étant coupée selon un plan de coupe parallèle à la direction d'envergure du volet ;
- la figure 10 représente une vue en coupe similaire à celle de la précédente, coupée selon un autre plan de coupe parallèle à la direction d'envergure du volet ;
- la figure 11 représente une vue partielle en perspective d'un système de rail d'entrainement et de guidage similaire à celui de la figure 3, et se présentant sous la forme d'un second mode de réalisation préféré de l'invention ;
- la figure 12 représente une vue en perspective du système de rail en coopération montré sur la figure précédente, avec des moyens d'actionnement intégrés au corps fixe d'aile, la vue étant coupée selon un plan de coupe orthogonal à la direction d'envergure du volet ;
- la figure 13 représente une vue en coupe du système de rail montré sur les figures 10 et 11, en coopération avec des moyens d'actionnement intégrés au corps fixe d'aile, la vue étant coupée selon un plan de coupe parallèle à la direction d'envergure du volet ;
- la figure 14 représente une vue en coupe similaire à celle de la précédente, coupée selon un autre plan de coupe parallèle à la direction d'envergure du volet ;
- la figure 15 représente une vue partielle en perspective similaire à celle des figures 11 et 12, selon une alternative de réalisation ;
- la figure 16 représente une vue en coupe similaire à celle de la figure 14, coupée selon un plan de coupe de la figure 16, parallèle à la direction d'envergure du volet.

### EXPOSÉ DÉTAILLÉ DE MODES DE RÉALISATION PRÉFÉRÉS

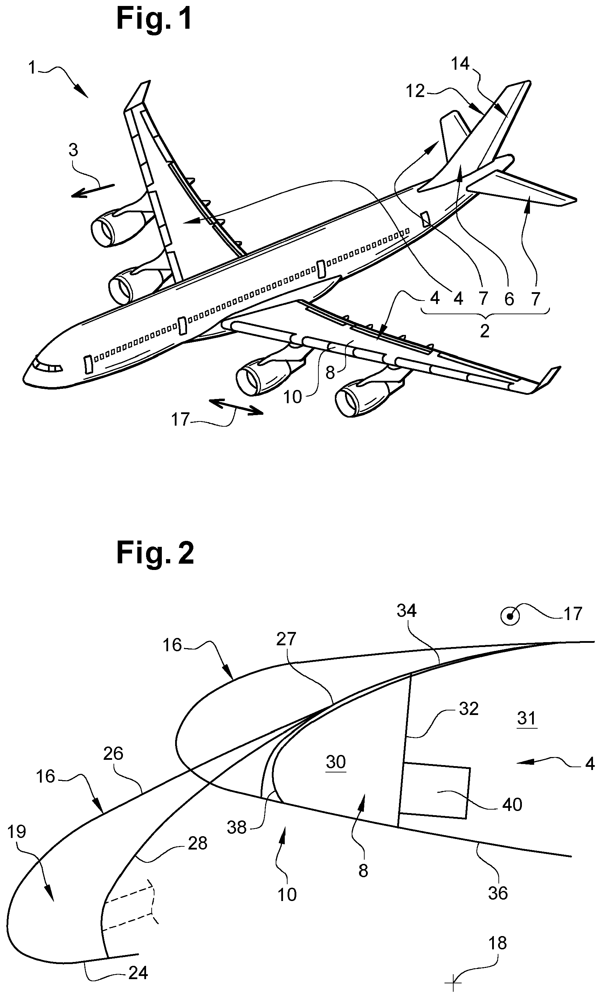

En référence tout d'abord à la figure 1, il est représenté un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3, et également dénommée « direction de vol ».

Parmi les éléments de voilure de l'aéronef 1, il est prévu deux ailes principales, dites ailes 4, une dérive verticale 6, ainsi que deux empennages horizontaux 7 situés à l'arrière de cet aéronef.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10.

Comme le montre schématiquement la figure 2, c'est le bord d'attaque 10 de chacune des deux ailes 4 qui peut être équipé d'au moins un volet mobile de bord d'attaque 16 spécifique à la présente invention, et dit « Slat ». Habituellement, ce sont plusieurs volets mobiles de bord d'attaque 16 qui se succèdent le long du corps central fixe 8, selon une direction d'envergure 17 de l'aile.

Chacun de ces volets 16 est destiné à être relié au corps 8 par des moyens uniquement représentés partiellement en pointillés en bas de la figure 2, et qui seront détaillés ci-après. Sur cette figure 2, il est montré que le volet mobile de bord d'attaque 16, dont il est représenté sa partie aérodynamique 19 par exemple en forme de caisson, peut occuper une position rétractée/rentrée dans laquelle il affleure la partie avant du corps central fixe 8 de l'aile 4. Dans un tel cas, le volet mobile 16 se trouve dans sa position la plus arrière. De plus, le volet mobile 16 peut occuper une position entièrement déployée, représentée plus à gauche sur la figure, où il est à distance vers l'avant du corps central fixe 8, cette position entièrement déployée étant adoptée en particulier durant les phases de décollage et d'atterrissage afin d'augmenter la portance à faible ou moyenne vitesse. Ce volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 concernée, bien entendu selon la direction d'envergure 17 de cette aile 4, ou bien uniquement sur une portion seulement de cette aile, comme cela est le plus courant sur les aéronefs, où chaque aile est équipée de plusieurs volets mobiles 16 comme cela a été indiqué précédemment.

De façon connue, la partie aérodynamique 19 du volet 16 comporte un revêtement aérodynamique définissant une portion intrados 24 ainsi qu'une portion extrados 26, cette dernière se terminant par un bord de fuite 27 du volet. De plus, cette partie 19 est fermée vers l'arrière par un revêtement de fermeture 28, destiné à épouser le corps fixe d'aile 8 lorsque le volet 16 occupe la position rentrée.

Le corps central fixe d'aile 8 présente un espace d'extrémité avant 30, situé devant un caisson de voilure 31 et de préférence délimité vers l'arrière par un longeron avant 32 de ce caisson. Cet espace 30 forme une portion de bord d'attaque du corps fixe 8.

Le longeron avant s'étend parallèlement à la direction d'envergure 17, sur sensiblement toute la longueur de l'aile. Il forme ainsi le caisson fixe de voilure 31 avec une peau d'extrados 34, une peau d'intrados 36, et un longeron arrière non visible sur la figure 2. Le caisson de voilure 31 apporte de manière classique une fonction structurale à l'aile, mais il peut également être au moins partiellement rempli de carburant. A l'avant de ce caisson 31, le corps central fixe 8 comporte une paroi 38 formant un bord d'attaque de ce corps 8, de forme complémentaire ou sensiblement complémentaire de celle du revêtement de fermeture arrière 28 de la partie aérodynamique du volet 16.

Sur la figure 2, le volet mobile 16 se trouve donc représenté dans ses deux positions rentrée et déployée. Le déplacement entre ces positions est opéré par des moyens d'actionnement 40 (représentés uniquement schématiquement), logés dans le corps central fixe 8. Quant à la trajectoire du volet suivant un arc de cercle, elle est imposée par un ou plusieurs systèmes de rails d'entraînement et de guidage spécifiques à l'invention, complétés éventuellement par un ou plusieurs dispositifs de simple guidage permettant ici la mise en rotation du volet 16 selon un axe de rotation 18. Des mouvements du volet plus complexes peuvent néanmoins être envisagés, par exemple des mouvements comportant une telle rotation, sans sortir du cadre de l'invention.

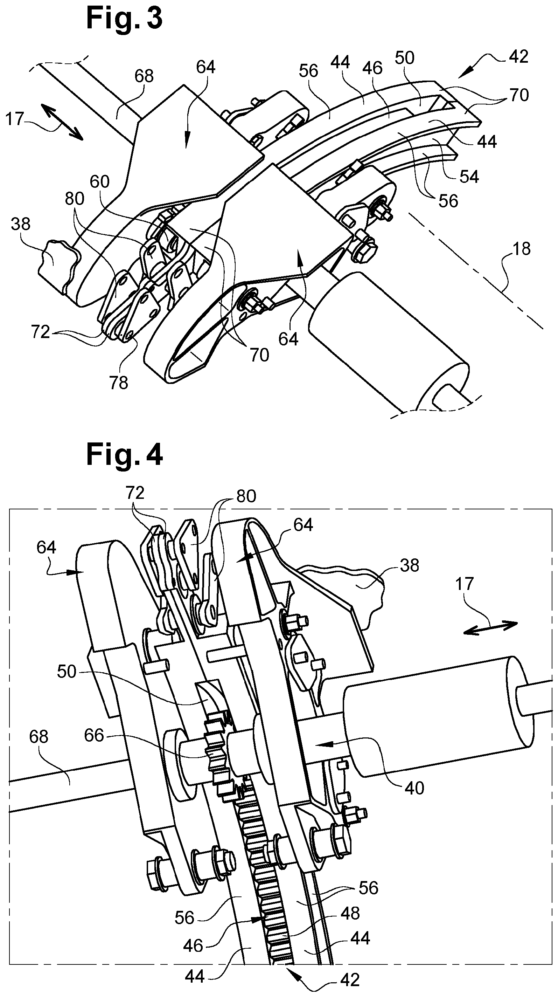

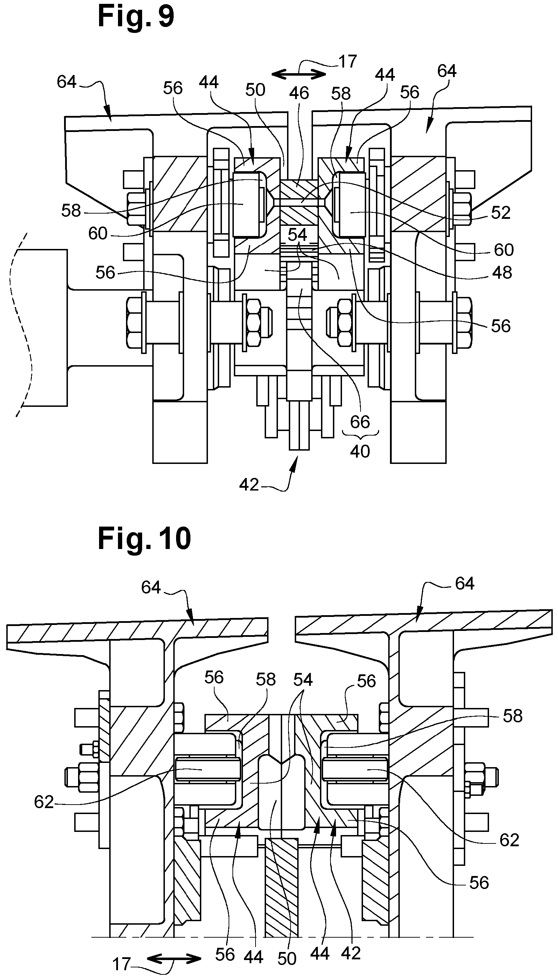

En référence aux figures 3 à 10, il sera uniquement décrit l'un des systèmes de rails d'entraînement et de guidage selon un premier mode de réalisation préféré de l'invention, étant précisé que plusieurs de ces systèmes peuvent équiper un même volet mobile 16, de préférence en étant espacés les uns des autres selon la direction d'envergure 17.

Le volet 16 comporte donc, en plus de sa partie aérodynamique 19, un système 42 de rail d'entraînement et de guidage de ce volet par rapport au corps fixe 8. Globalement, ce système de rail 42 est particulier en ce qu'il comporte deux rails 44 parallèles, s'étendant chacun sur toute la longueur du système de rail 42. De plus, une armature intermédiaire 46 parallèle à ces deux rails 44 présente une piste dentée d'entraînement 48, et cette armature 46 est logée dans un espace 50 défini entre les deux rails 44. Ces trois éléments 44, 46, 44 sont plaqués les uns aux autres selon une direction d'empilement correspondant ici préférentiellement à la direction d'envergure 17, étant précisé que ces mêmes trois éléments empilés distincts présentent chacun une même forme générale courbe suivant un arc de cercle centré sur l'axe 18, et s'inscrivant dans un plan orthogonal à la direction d'envergure 17.

Chacun de ces trois éléments 44, 46, 44 est réalisé d'un seul tenant, en étant préférentiellement métallique ou en matériau composite comprenant une matrice et une charge, intégrant par exemple des fibres de verre et/ou des fibres de carbone. Pour réaliser leur assemblage, il est prévu des éléments de fixation 52 qui traversent chacun les deux rails 44 ainsi que l'armature intermédiaire 46, à distance de sa piste dentée d'entraînement 48. Il s'agit de préférence de boulons 52, par exemple orientés parallèlement à la direction d'empilement, et espacés les uns des autres le long des rails 44, de l'avant vers l'arrière. Sur la figure 3, ce sont par exemple cinq boulons 52 répartis le long du système de rail 42. Alternativement, les deux rails 44 pourraient être assemblés séparément sur l'armature intermédiaire 46, c'est-à-dire avec des éléments de fixation distincts donc non-partagés par ces deux rails, par exemple du type rivets.

Une très grande proportion de chacun des deux rails 44 présente une partie de guidage du volet, reconnaissable à sa section générale en forme de C. La partie de guidage débute de préférence dès l'extrémité arrière de chaque rail 44, et s'étend jusqu'à proximité d'une extrémité avant. Il peut s'agir par exemple d'une longueur de l'ordre de 70% ou plus de la longueur totale des rails 44, chacun réalisé d'une seule pièce.

Les deux parties de guidage en forme de C des rails 44 sont agencées dos-à-dos, l'âme centrale 54 des deux C se faisant face. En revanche, les deux branches opposées 56 des deux C, s'étendant respectivement à partir des deux extrémités de chaque âme centrale 54, forment deux creux 58 ouverts dans la direction d'envergure 17, c'est-à-dire deux creux ouverts latéralement dans des directions opposées à celle de l'armature intermédiaire 46.

La forme de C qui définit les creux 58 se révèle parfaitement adaptée pour réaliser le guidage du volet, à l'aide d'éléments de guidage du type galet 60, 62, qui sont logés dans ces creux 58. Sur la figure 6, les extrémités opposées des éléments de fixation 52 sont représentées en saillie à l'intérieur des creux 58, mais une solution alternative pourrait consister à ce que ces extrémités ne soient pas en saillie, par exemple contenues dans des lamages prévus sur les âmes centrales 54 des deux C.

A cet égard il est noté que le corps central fixe 8 est équipé de ferrures de renfort 64 qui sont agencées dans la portion de bord d'attaque 30, et qui sont éventuellement elles-mêmes fixées au longeron avant du caisson fixe de voilure. Chaque ferrure de renfort 64 s'étend globalement dans un plan orthogonal à la direction d'envergure 17, en présentant un contour de forme complémentaire de celle de la portion de bord d'attaque 30. En particulier, l'extrémité avant de chaque ferrure de renfort 64 est destinée à épouser intérieurement la paroi 38 formant le bord d'attaque du corps fixe d'aile, comme cela est visible sur les figures 3 et 4.

Dans le mode de réalisation préféré représenté, ce sont deux ferrures de renfort 64 qui sont respectivement agencées de part et d'autre du système de rail 42, selon la direction d'envergure 17. Ces ferrures 64 peuvent ainsi porter les galets de guidage 60, 62 qui s'insèrent dans les creux 58 des rails 44.

Plus précisément, il s'agit de plusieurs galets principaux 60, par exemple deux galets espacés le long de chaque rail 44, et d'axes de rotation parallèles à la direction d'envergure 17. Ces galets principaux 60 coopèrent avec les deux branches opposées 56 des C, en ce sens qu'ils peuvent établir intérieurement le contact avec elles pour guider le système 42 et l'ensemble du volet 16 selon une direction de la hauteur. De manière analogue, il s'agit également de plusieurs galets latéraux 62, par exemple deux galets espacés le long de chaque rail 44, et d'axes de rotation orthogonaux à la direction d'envergure 17. Ces galets latéraux 62 coopèrent avec les âmes centrales 54 des C, en ce sens qu'ils peuvent établir extérieurement le contact avec elles pour guider le système 42 et l'ensemble du volet 16 selon la direction d'envergure 17, tout en restant logés dans le creux 58 comme les galets principaux 60.

En outre, ces ferrures de renfort 64 portent les moyens 40 d'actionnement du volet 16, ces moyens 40 comportant une roue dentée d'entrainement 66 engrenant avec la piste dentée 48 de l'armature intermédiaire 46. La roue dentée 66 est elle-même entraînée en rotation par un arbre moteur 68 cheminant selon la direction d'envergure 17 dans le corps fixe 8. Cet arbre 68 peut d'ailleurs entraîner d'autres roues dentées associées à d'autres systèmes de rails 42.

De part et d'autre de l'espace 50 défini entre les deux âmes 54 de la partie de guidage des rails 44, et logeant l'armature intermédiaire 46, chacun des deux rails 44 présente des portions 70 d'appui sur l'autre rail, selon la direction d'empilement 17. Les quatre portions 70 qui coopèrent deux à deux se trouvent respectivement aux deux extrémités opposées de la partie de guidage des rails. Elles viennent donc fermer l'espace 50 selon la direction de la longueur des rails 44 et du système 42.

Pour assurer leur assemblage deux à deux, des éléments de fixation 74 du type boulons ou rivets traversent ces portions d'appui 70, en étant également de préférence orientés parallèlement à la direction d'envergure 17.

Si deux de ces portions d'appui 70 forment les deux extrémités arrière des deux rails 44, les deux autres portions d'appui 70 sont quant à elles, à l'opposé, prolongées par des portions d'extrémité avant 72 des deux rails 44. Ces deux portions d'extrémité avant parallèles 72, matérialisant la segmentation des deux rails 44 tout le long du système 42, prolongent le contact entre les deux mêmes rails. Bien que faisant partie de ces rails, elles ne servent plus réellement au guidage du volet, car elles ne coopèrent pas avec les galets. Ces portions d'extrémité avant 72 sont également assemblées l'une à l'autre par des éléments de fixation 78 du type boulons ou rivets traversant ces portions, et étant aussi de préférence orientés parallèlement à la direction d'envergure 17.

Ces éléments de fixation 78 permettent par ailleurs de fixer des ferrures 80 en les traversant, ces ferrures 80 faisant partie intégrante de moyens de raccordement mécanique de la partie aérodynamique 19 du volet, sur la portion d'extrémité avant 72 des rails 44. En effet, à une extrémité opposée, les ferrures de raccordement 80 de forme droite, triangulaire ou autre sont fixées à une ou plusieurs nervures de raccord 82 intégrées à la partie aérodynamique 19, et faisant saillie vers l'arrière à partir de son revêtement de fermeture 28, comme cela a été schématisé sur la figure 5. Dans une réalisation préférée, les éléments de fixation 78 permettent uniquement de fixer les ferrures 80 aux deux rails, mais sans participer à la fixation de ces deux rails ensemble.

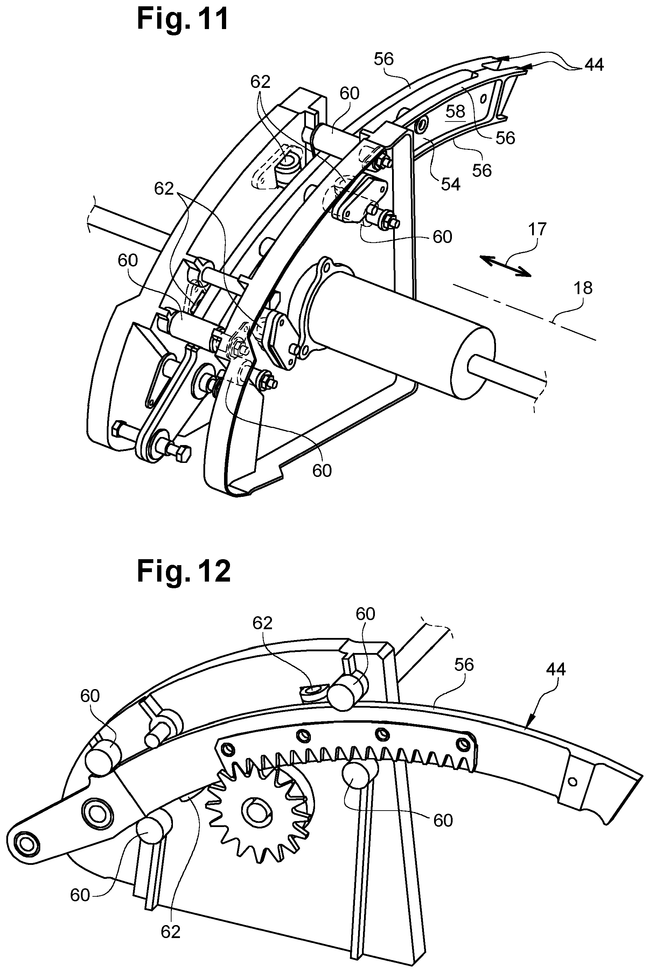

Les figures 11 à 14 montrent un second mode de réalisation préféré de l'invention, présentant de nombreux points communs avec le premier mode décrit ci-dessus. D'ailleurs, sur les figures, les éléments portant les mêmes références numériques correspondent à des éléments identiques ou similaires. La différence réside dans le fait que les éléments de guidage 60, 62 coopèrent toujours avec les rails 44, mais en restant agencés en dehors des creux 58 définis par la forme générale en C des rails 44.

En effet, pour ce qui concerne les galets principaux 60, ils coopèrent extérieurement avec les branches 56 des C, en étant chacun en appui sur la surface extérieure de deux branches supérieures 56 ou de deux branches inférieures 56 des rails 44. Ici également, il s'agit de plusieurs galets principaux 60, de plus grande longueur pour pouvoir contacter simultanément les deux branches 56 auxquelles chacun de ces galets 60 est associé. Par exemple, ce sont un ou plusieurs galets principaux 60, dit galets principaux supérieurs, qui contactent les branches supérieures 56 des rails, et également un ou plusieurs galets principaux 60, dit galets principaux inférieurs, qui contactent les branches inférieures 56 des rails. Sur les figures, ce sont donc deux galets supérieurs 60 et deux galets inférieurs 62, toujours d'axes de rotation parallèles à la direction d'envergure 17, qui enserrent l'ensemble de rails 44 selon la direction de la hauteur, ou encore de l'épaisseur de l'aile.

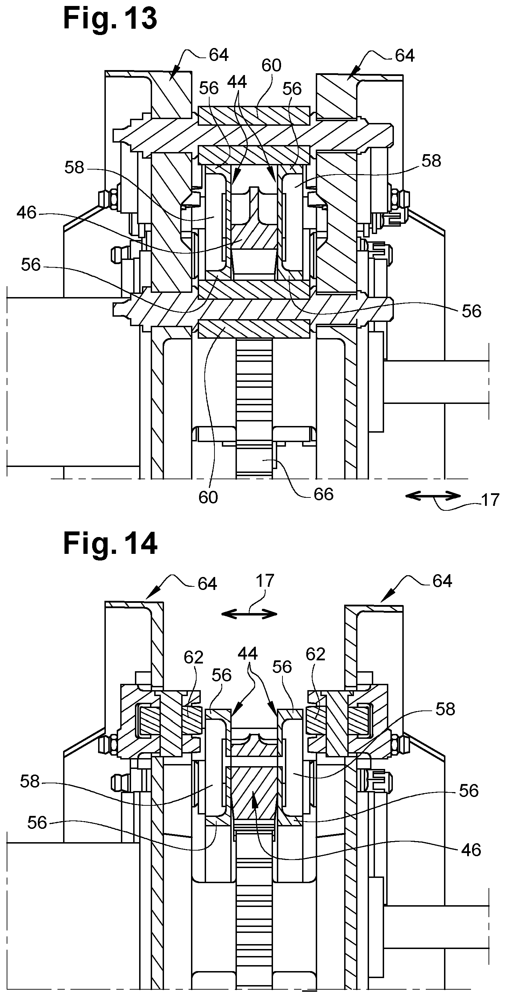

Par ailleurs, il peut être prévu des galets latéraux 62 coopérant également extérieurement avec les branches 56 des C, non pas avec leurs surfaces extérieures supérieures et inférieures, mais avec le chant latéral externe de ces branches, comme cela est le mieux visible sur la figure 14. Ces chants correspondent aux extrémité latérales libres des branches 56 des C.

Par exemple, ce sont un ou plusieurs galets latéraux 62, dit galets latéraux supérieurs, qui contactent le chant des branches supérieures 56 des rails, et également un ou plusieurs galets latéraux 62, dit galets latéraux inférieurs, qui contactent le chant des branches inférieures 56 des rails. Sur les figures, ce sont donc deux galets supérieurs 62 et deux galets inférieurs 62, toujours d'axes de rotation orthogonaux à la direction d'envergure 17, qui enserrent l'ensemble de rails 44 selon la direction d'envergure de l'aile.

Ce second mode de réalisation préféré peut être privilégié pour des ailes présentant de faibles contraintes d'encombrement, permettant l'implantation des galets 60, 62 en dehors des creux 58 de C. La longueur latérale des branches 56 des rails peut avantageusement être réduite. De plus, les efforts appliqués par les galets sur les rails sont répartis de manière plus homogène, ce qui favorise un déplacement plus aisé de ces rails.

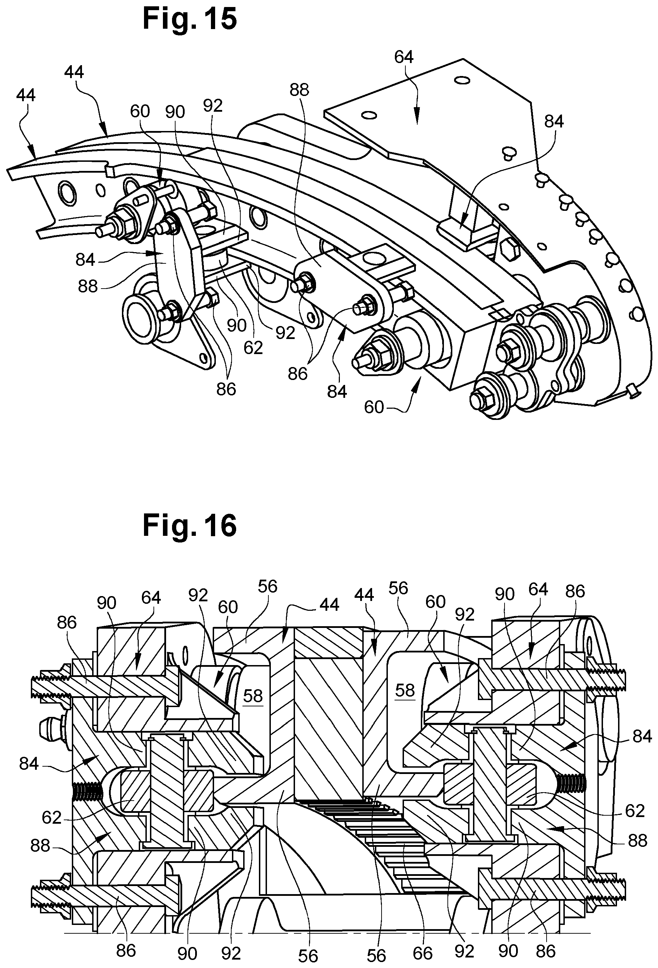

Dans le cas où un ou plusieurs galets latéraux 62 coopèrent extérieurement avec le chant latéral externe des branches 56 des C, l'invention prévoit la possibilité de conférer une fonction sécuritaire supplémentaire, qui va être décrite ci-dessous en référence aux figures 15 et 16. Cette fonction sera décrite en association avec un galet latéral 62, mais elle peut être mise en œuvre pour plusieurs de ces galets latéraux, voire préférentiellement pour la totalité d'entre eux.

Le galet latéral 62 appartient à un ensemble mécanique de guidage 84 monté sur l'une des ferrures de renfort 64 du corps central fixe d'aile, à l'aide par exemple de boulons 86, ou d'éléments de fixation similaires. L'ensemble mécanique de guidage 84 comporte un support 88 en forme de chape, dont une base de cette chape est traversée par les boulons de fixation 86. Les deux branches de chape 90 sont traversées orthogonalement par l'axe de rotation du galet latéral 62, et elles présentent chacune, au niveau d'une extrémité libre de celles-ci, une extension 92 de branche de chape qui s'étend au-delà du galet latéral 62 dans la direction opposée à celle de la base de la chape.

Les deux extensions de branche de chape 92 sont suffisamment étendues pour se trouver agencées de part et d'autre de la branche 56 du C contre laquelle le galet latéral 62 est en appui, au niveau du chant comme décrit précédemment. En conditions normales de vol, dans lesquelles aucun des galets principaux 60 n'est défaillant, un jeu est préférentiellement observé entre chaque extension 92 et la surface en regard de la branche 56 du C concernée. Cela permet de limiter les frottements en conditions normales de vol, lors du déploiement / du retrait du volet mobile.

Grâce à cette conception particulière, l'ensemble mécanique de guidage 84 participe non seulement au guidage latéral des rails grâce à l'appui du galet latéral 62 sur le chant latéral externe de la branche 56 du rail, mais ils peut également remplir une fonction additionnelle sécuritaire en cas de défaillance sur l'un des galets principaux 60. En effet, lorsqu'une telle défaillance survient et que le guidage initialement conféré par le galet principal 60 n'est plus opérant, les deux extensions de branche de chape 92 peuvent prendre le relais dans le guidage du rail selon la direction de la hauteur, au moins pendant une durée déterminée. Cette fonction additionnelle « Fail Safe » est effectivement obtenue du fait de la disposition des deux extensions 92 de part et d'autre de la branche 56 du C selon la direction de la hauteur, puisqu'au cours du déplacement du volet, ces extensions 92 peuvent avantageusement entrer tour à tour en contact avec les surfaces opposées de la branche 56, après consommation des jeux verticaux.

Il est noté que cette particularité a été présentée dans une solution montrée sur les figures 15 et 16 où les galets principaux 60 sont agencés à l'intérieur des rails en C, comme dans le premier mode de réalisation préféré décrit précédemment, mais qu'alternativement, ces galets principaux 60 pourraient être agencés extérieurement aux rails, comme dans le second mode de réalisation préféré de l'invention.

Bien entendu, diverses modifications peuvent être apportées par l'homme du métier à l'invention qui vient d'être décrite, uniquement à titre d'exemples non limitatifs, et dont la portée est délimitée par les revendications annexées. En particulier, les caractéristiques techniques des différents modes de réalisation décrits sont combinables et/ou interchangeables. Par exemple, une solution hybride pourrait consister à prévoir que certains galets soient logés dans les creux définis par la forme générale en C des rails, tandis que d'autres galets coopèreraient avec les rails en étant agencés en dehors de ces creux.

## Revendications

1. Volet mobile (16) de bord d'attaque pour aéronef comprenant une partie aérodynamique (19) ainsi qu'au moins un système (42) de rail d'entraînement et de guidage de ce volet mobile, le volet comprenant également des moyens de raccordement mécanique (80) de la partie aérodynamique (19) sur une portion d'extrémité avant du système de rail d'entraînement et de guidage (42), le système de rail d'entrainement et de guidage (42) comportant
deux rails (44) s'étendant chacun sur toute la longueur du système de rail, une armature intermédiaire (46) équipée d'une piste dentée d'entraînement (48) étant logée entre les deux rails (44) selon une direction d'empilement de ces trois éléments distincts, la direction d'empilement correspondant à la direction d'envergure (17) du volet mobile,
des éléments (52) de fixation des rails permettant de fixer chaque rail sur l'armature intermédiaire (46), et, préférentiellement, traversent chacun les deux rails (44) ainsi que l'armature intermédiaire (46),
lesdits moyens de raccordement mécanique (80) de la partie aérodynamique (19) étant fixés sur une portion d'extrémité avant (72) de chacun des deux rails (44), chacun des deux rails (44) présentant une section en forme générale de C, avec les deux C agencés dos-à-dos et leurs creux (58) ouverts dans la direction d'envergure (17),
**caractérisé en ce que** de part et d'autre d'un espace (50) défini entre les deux rails (44) pour le logement de l'armature intermédiaire (46) équipée de la piste dentée (48), chacun des deux rails (44) présente des portions d'appui (70) sur l'autre rail, selon la direction d'empilement, de sorte à avoir quatre portions d'appui (70) qui coopèrent deux à deux en se trouvant respectivement aux deux extrémités opposées d'une partie de guidage des rails, et en venant fermer selon la direction de la longueur des deux rails (44) l'espace (50) logeant l'armature intermédiaire (46), deux des quatre portions d'appui (70) formant les deux extrémités arrière des deux rails (44), et les deux autres portions d'appui (70) étant, à l'opposé, prolongées respectivement par les deux portions d'extrémité avant (72) des deux rails (44), les portions d'appui (70) étant traversées par des éléments de fixation (74) ne traversant pas l'armature intermédiaire (46).

2. Volet mobile selon la revendication 1, **caractérisé en ce que** chacun des deux rails (44) est réalisé d'un seul tenant.

3. Volet mobile selon la revendication 1 ou 2, **caractérisé en ce que** les moyens de raccordement mécanique comprennent des ferrures (80) fixées sur les deux rails (44).

4. Volet mobile selon l'une quelconque des revendications précédentes, **caractérisé en ce que** les éléments de fixation (52) des rails (44) comprennent des boulons répartis le long du système de rail d'entrainement et de guidage (42).

5. Aile d'aéronef (4) comprenant un corps central fixe d'aile (8), ainsi qu'au moins un volet mobile de bord d'attaque (16) selon l'une quelconque des revendications précédentes, le volet (16) étant destiné à être déplacé relativement audit corps central fixe entre une position déployée et une position rentrée, le corps central fixe d'aile (8) étant équipé de moyens d'actionnement (40) de la piste dentée d'entraînement (48) du volet mobile, ces moyens d'actionnement (40) comprenant de préférence une roue dentée d'entraînement (66) engrenant avec la piste dentée d'entraînement (48) du volet mobile.

6. Aile selon la revendication 5, **caractérisée en ce qu'**elle comporte des ferrures de renfort (64) agencées dans une portion de bord d'attaque (30) du corps central fixe (8) de l'aile, et **en ce que** les moyens d'actionnement (40) sont montés sur ces ferrures de renfort (64).

7. Aile selon la revendication 5 ou 6, **caractérisée en ce que** le corps central fixe (8) est équipé d'éléments de guidage (60, 62) du volet mobile, coopérant avec les rails (44).

8. Aile selon la revendication 7, **caractérisée en ce qu'**au moins certains des éléments de guidage (60, 62) du volet mobile sont logés dans les creux (58) définis par la forme générale en C des rails (44).

9. Aile selon la revendication 8, **caractérisée en ce que** les éléments de guidage (60,62) comprennent des galets principaux (60) coopérant intérieurement avec les deux branches opposées (56) des C, et de préférence également des galets latéraux (62) coopérant avec l'âme centrale (54) de ces mêmes C.

10. Aile selon l'une quelconque des revendications 7 à 9, **caractérisée en ce qu'**au moins certains des éléments de guidage (60, 62) du volet mobile coopèrent avec les rails (44), en étant agencés en dehors des creux (58) définis par la forme générale en C des rails (44).

11. Aile selon la revendication 10, **caractérisée en ce que** les éléments de guidage (60, 62) comprennent des galets principaux (60) coopérant extérieurement avec les branches (56) des C, et de préférence également des galets latéraux (62) coopérant aussi extérieurement avec les branches (56) des C.

12. Aile selon la revendication 7, **caractérisée en ce qu'**au moins un élément de guidage en forme de galet latéral (62) de guidage du volet mobile, coopérant avec un chant latéral externe de l'une des branches (56) des C, est porté par un support en forme de chape (88) comprenant deux branches de chape (90) présentent chacune, au niveau d'une extrémité libre de celles-ci, une extension (92) de branche de chape qui s'étend au-delà du galet latéral (62) dans une direction opposée à celle d'une base de la chape (88), les deux extensions de branche de chape (92) étant agencées de part et d'autre de la branche (56) du C avec laquelle le galet latéral (62) coopère.

13. Aéronef (1) comprenant au moins une aile (4) selon l'une quelconque des revendications 5 à 12, cette aile étant préférentiellement équipée de plusieurs volets mobiles de bord d'attaque (16).

## Patentansprüche

1. Bewegliche Vorderkantenklappe (16) für Flugzeuge, die einen aerodynamischen Teil (19) sowie mindestens ein Antriebs- und Führungsschienensystem (42) dieser beweglichen Klappe umfasst, wobei die Klappe auch Mittel zur mechanischen Verbindung (80) des aerodynamischen Teils (19) an einem vorderen Endabschnitt des Antriebs- und Führungsschienensystems (42) umfasst,
wobei das Antriebs- und Führungsschienensystem (42) zwei Schienen (44) aufweist, die sich jeweils über die gesamte Länge des Schienensystems erstrecken, wobei eine Zwischenbewehrung (46), die mit einer Antriebszahnbahn (48) versehen ist, zwischen den beiden Schienen (44) in einer Stapelrichtung dieser drei getrennten Elemente aufgenommen ist, wobei die Stapelrichtung der Spannrichtung (17) der beweglichen Klappe entspricht,
Elemente (52) zur Befestigung der Schienen, mit denen jede Schiene an der Zwischenbewehrung (46) befestigt werden kann, und vorzugsweise durchlaufen sie jeweils die beiden Schienen (44) sowie die Zwischenbewehrung (46),
wobei die mechanischen Verbindungsmittel (80) des aerodynamischen Teils (19) auf einem vorderen Endabschnitt (72) jeder der beiden Schienen (44) befestigt sind,
wobei jede der beiden Schienen (44) einen allgemeinen C-förmigen Querschnitt aufweist, wobei die beiden Cs Rücken an Rücken angeordnet sind und ihre Vertiefungen (58) in Spannrichtung (17) offen sind,
**dadurch gekennzeichnet, dass** auf beiden Seiten eines zwischen den beiden Schienen (44) definierten Raums (50) für die Aufnahme der mit der Zahnbahn (48) ausgestatteten Zwischenbewehrung (46) jede der beiden Schienen (44) Stützabschnitte (70) an der anderen Schiene, entsprechend der Stapelrichtung, aufweist, so dass vier Stützabschnitte (70) vorhanden sind, die paarweise zusammenwirken, indem sie sich jeweils an den beiden gegenüberliegenden Enden eines Führungsabschnitts der Schienen befinden und den Raum (50), der die Zwischenbewehrung (46) aufnimmt, in der Längenrichtung der beiden Schienen (44) verschließen, wobei zwei der vier Stützabschnitte (70) die beiden hinteren Enden der beiden Schienen (44) bilden und die beiden anderen Stützabschnitte (70), gegenüberliegend, jeweils durch die beiden vorderen Endabschnitte (72) der beiden Schienen (44) verlängert sind, wobei die Stützabschnitte (70) von Befestigungselementen (74) durchquert werden, die die Zwischenbewehrung (46) nicht durchqueren.

2. Bewegliche Klappe nach Anspruch 1, **dadurch gekennzeichnet, dass** jede der beiden Schienen (44) in einem Stück ausgeführt ist.

3. Bewegliche Klappe nach Anspruch 1 oder 2, **dadurch gekennzeichnet, dass** die mechanischen Verbindungsmittel an den beiden Schienen (44) befestigte Beschläge (80) umfassen.

4. Bewegliche Klappe nach einem der vorhergehenden Ansprüche, **dadurch gekennzeichnet, dass** die Befestigungselemente (52) der Schienen (44) entlang des Antriebs- und Führungsschienensystems (42) verteilte Bolzen umfassen.

5. Flugzeugflügel (4), umfassend einen festen Flügelmittelkörper (8) sowie mindestens eine bewegliche Vorderkantenklappe (16) nach einem der vorhergehenden Ansprüche, wobei die Klappe (16) dazu bestimmt ist, relativ zu dem festen Mittelkörper zwischen einer ausgefahrenen Position und einer eingefahrenen Position bewegt zu werden, wobei der feste Flügelmittelkörper (8) mit Betätigungsmitteln (40) der Antriebszahnbahn (48) der beweglichen Klappe ausgestattet ist, wobei diese Betätigungsmittel (40) vorzugsweise ein Antriebszahnrad (66) umfassen, das in die Antriebszahnbahn (48) der beweglichen Klappe eingreift.

6. Flügel nach Anspruch 5, **dadurch gekennzeichnet, dass** er Verstärkungsbeschläge (64) aufweist, die in einem Vorderkantenabschnitt (30) des festen Mittelkörpers (8) des Flügels angeordnet sind, und dass die Betätigungsmittel (40) an diesen Verstärkungsbeschlägen (64) montiert sind.

7. Flügel nach Anspruch 5 oder 6, **dadurch gekennzeichnet, dass** der feste Mittelkörper (8) mit Führungselementen (60, 62) der beweglichen Klappe ausgestattet ist, die mit den Schienen (44) zusammenwirken.

8. Flügel nach Anspruch 7, **dadurch gekennzeichnet, dass** mindestens einige der Führungselemente (60, 62) der beweglichen Klappe in den durch die allgemeine C-Form der Schienen (44) definierten Vertiefungen (58) aufgenommen sind.

9. Flügel nach Anspruch 8, **dadurch gekennzeichnet, dass** die Führungselemente (60, 62) Hauptrollen (60) umfassen, die innen mit den beiden gegenüberliegenden Schenkeln (56) der Cs zusammenwirken, und vorzugsweise auch seitliche Rollen (62), die mit dem Mittelsteg (54) derselben Cs zusammenwirken.

10. Flügel nach einem der Ansprüche 7 bis 9, **dadurch gekennzeichnet, dass** mindestens einige der Führungselemente (60, 62) der beweglichen Klappe mit den Schienen (44) zusammenwirken, indem sie außerhalb der durch die allgemeine C-Form der Schienen (44) definierten Vertiefungen (58) angeordnet sind.

11. Flügel nach Anspruch 10, **dadurch gekennzeichnet, dass** die Führungselemente (60, 62) Hauptrollen (60) umfassen, die außen mit den Schenkeln (56) der Cs zusammenwirken, und vorzugsweise auch seitliche Rollen (62), die auch außen mit den Schenkeln (56) der Cs zusammenwirken.

12. Flügel nach Anspruch 7, **dadurch gekennzeichnet, dass** mindestens ein Führungselement in Form einer seitlichen Rolle (62) zur Führung der beweglichen Klappe, das mit einer äußeren seitlichen Kante einer der Schenkel (56) der Cs zusammenwirkt, von einem Träger in Form eines Gabelkopfs (88) getragen wird, der zwei Gabelkopfschenkel (90) umfasst, die jeweils an einem freien Ende davon eine Gabelkopfschenkel-Verlängerung (92) aufweisen, die sich über die seitliche Rolle (62) hinaus in einer entgegengesetzten Richtung zu einer Gabelkopfbasis (88) erstreckt, wobei die beiden Gabelkopfschenkel-Verlängerungen (92) auf beiden Seiten des Schenkels (56) des Cs angeordnet sind, mit dem die seitliche Rolle (62) zusammenwirkt.

13. Luftfahrzeug (1), das mindestens einen Flügel (4) nach einem der Ansprüche 5 bis 12 umfasst, wobei dieser Flügel vorzugsweise mit mehreren beweglichen Vorderkantenklappen (16) ausgestattet ist.

## Claims

1. Movable leading-edge flap (16) for aircraft comprising an aerodynamic part (19) as well as at least one rail system (42) for driving and guiding this movable flap, the flap also comprising means for mechanically connecting (80) the aerodynamic part (19) on a front end portion of the drive and guide rail system (42),
the drive and guide rail system (42) including two rails (44) each extending over the entire length of the rail system, an intermediate reinforcement (46) provided with a toothed drive track (48) being housed between the two rails (44) in a direction in which these three separate elements are stacked, the stacking direction corresponding to the spanwise direction (17) of the movable flap,
rail-fastening elements (52) allowing each rail to be fastened to the intermediate reinforcement (46), and, preferably, pass through each of the two rails (44) as well as the intermediate reinforcement (46),
said means for mechanically connecting (80) the aerodynamic part (19) being fastened on a front end portion (72) of each of the two rails (44),
each of the two rails (44) having an overall C-shaped cross-section, with the two Cs arranged back-to-back and their recesses (58) open in the spanwise direction (17),
**characterised in that** on either side of a space (50) defined between the two rails (44) for housing the intermediate reinforcement (46) provided with the toothed track (48), each of the two rails (44) has portions for bearing (70) on the other rail, in the stacking direction, so as to have four portions (70) that cooperate two-by-two being respectively at the two opposite ends of the guide part of the rails, and closing, in the lengthwise direction of the two rails (44), the space (50) housing the intermediate reinforcement (46), two of these four bearing portions (70) forming the two rear ends of the two rails (44), and the two other bearing portions (70) for their part being, on the contrary, extended by the front end portions (72) of the two rails (44), the bearing portions (70) being passed through by fastening elements (74), that do not pass through the intermediate frame (46).

2. Movable flap according to claim 1, **characterised in that** each of the two rails (44) is made in one piece.

3. Movable flap according to claim 1 or 2, **characterised in that** the mechanical connection means comprise brackets (80) fastened on the two rails (44).

4. Movable flap according to any one of the preceding claims, **characterised in that** the rail (44) fastening elements (52) comprise bolts distributed along the drive and guide rail system (42).

5. Aircraft wing (4) comprising a fixed central wing body (8), as well as at least one movable leading-edge flap (16) according to any one of the preceding claims, the flap (16) being intended to be moved relative to said fixed central body between a deployed position and a retracted position, the fixed central wing body (8) being provided with means for actuating (40) the toothed drive track (48) of the movable flap, these actuation means (40) preferably comprising a toothed drive wheel (66) engaging with the toothed drive track (48) of the movable flap.

6. Wing according to claim 5, **characterised in that** it includes reinforcing brackets (64) arranged in a leading-edge portion (30) of the fixed central body (8) of the wing, and **in that** the actuation means (40) are mounted on these reinforcing brackets (64).

7. Wing according to claim 5 or 6, **characterised in that** the fixed central body (8) is provided with elements for guiding (60, 62) the movable flap, cooperating with the rails (44).

8. Wing according to claim 7, **characterised in that** at least some of the guide elements (60, 62) of the movable flap are housed in the recesses (58) defined by the overall C-shape of the rails (44).

9. Wing according to claim 8, **characterised in that** the guide elements (60, 62) comprise main rollers (60) cooperating internally with the two opposite branches (56) of the Cs, and preferably also lateral rollers (62) cooperating with the central core (54) of these same Cs.

10. Wing according to any one of claims 7 to 9, **characterised in that** at least some of the guide elements (60, 62) of the movable flap cooperate with the rails (44), by being arranged outside of the recesses (58) defined by the overall C-shape of the rails (44).

11. Wing according to claim 10, **characterised in that** the guide elements (60, 62) comprise main rollers (60) cooperating externally with the branches (56) of the Cs, and preferably also lateral rollers (62) also cooperating externally with the branches (56) of the Cs.

12. Wing according to claim 7, **characterised in that** at least one guide element in the form of a lateral roller (62) for guiding the movable flap, cooperating with an outer lateral edge of one of the branches (56) of the Cs, is carried by a support in the form of a clevis (88) comprising two clevis branches (90) each having, at one free end thereof, a clevis branch extension (92) that extends beyond the lateral roller (62) in a direction opposite to that of a base of the clevis (88), the two clevis branch extensions (92) being arranged on either side of the branch (56) of the C with which the lateral roller (62) cooperates.

13. Aircraft (1) comprising at least one wing (4) according to any one of claims 5 to 12, this wing preferably being provided with a plurality of movable leading-edge flaps (16).
